# EUROPÄISCHE PATENTSCHRIFT

(11) **EP 1 210 995 B1**
(45) Veröffentlichungstag und Bekanntmachung des Hinweises auf die Patenterteilung: **10.09.2003**
(21) Anmeldenummer: 00126627.9
(22) Anmeldetag: 04.12.2000
(51) Int. Cl.: B21D 5/00, B23P 23/02, B21D 5/02, B21D 43/26

(54) **Maschine für die Bearbeitung von Werkstücken, insbesondere von Blechen, mit wenigstens einer Biegestation sowie wenigstens einer Fügevorrichtung**
Machine for processing workpieces, in particular metal sheets, with at least a bending station and a joining device
Machine pour l'usinage de pièces, notamment de tôles, avec au moins un dispositif de cintrage et un dispositif d'assemblage

(43) Veröffentlichungstag der Anmeldung: 05.06.2002
(73) Patentinhaber: TRUMPF Werkzeugmaschinen GmbH + Co. KG, 71254 Ditzingen (DE)
(72) Erfinder: Kilian, Friedrich, 71287 Flacht (DE); Wilbs, Hubert, 78713 Schramberg (DE)
(74) Vertreter: KOHLER SCHMID + PARTNER

(56) Entgegenhaltungen:
- DE-C- 3 909 387
- PATENT ABSTRACTS OF JAPAN vol. 015, no. 032 (M-1073), 25. Januar 1991 (1991-01-25) & JP 02 274316 A (AMADA CO LTD), 8. November 1990 (1990-11-08)

## Beschreibung

Die Erfindung betrifft eine Maschine für die Bearbeitung von Werkstücken, insbesondere von Blechen, umfassend wenigstens eine Biegestation mit zumindest einem Biegewerkzeug zum Biegen eines Werkstücks sowie mit zumindest einer Positioniereinrichtung zum Positionieren des Werkstücks gegenüber dem Biegewerkzeug, wobei die Positioniereinrichtung der Biegestation wenigstens einen Positionieranschlag für das Werkstück aufweist, der mittels eines Verfahrantriebes gesteuert verfahrbar ist.

Die Erfindung betrifft des Weiteren eine Maschine für die Bearbeitung von Werkstücken, insbesondere von Blechen, umfassend wenigstens eine Biegestation mit zumindest einem Biegewerkzeug zum Biegen eines Werkstücks, wobei das Biegewerkzeug ein Biegeober- sowie ein Biegeunterwerkzeug aufweist und das Biegeoberwerkzeug mittels eines gesteuert heb- und senkbaren Oberwerkzeugträgers unter Biegen des Werkstückes relativ zu dem Biegeunterwerkzeug bewegbar ist.

Eine Maschine mit den vorstehenden Merkmalen ist beschrieben in EP-A-0 650 782. Bei der vorbekannten Maschine handelt es sich um eine reine Biegemaschine.

Im Rahmen moderner Fertigungsabläufe sind an Werkstücken häufig ihrer Art nach unterschiedliche Bearbeitungen vorzunehmen. Bleche etwa werden in der modernen, flexiblen Fertigung beispielsweise zunächst gebogen und anschließend einer Fügeoperation unterworfen. Eine Maschine, an der diese beiden Bearbeitungsarten durchgeführt werden können, offenbart JP-A-02274316. Diese Maschine weist ein Biegewerkzeug, bestehend aus einem Biegeoberund einem Biegeunterwerkzeug sowie einen an dem Maschinenrahmen angetrieben bewegbaren Schweißkopf auf. Mittels des Schweißkopfes können an zwischen dem Biegeober- und dem Biegeunterwerkzeug der Maschine geklemmten Werkstücken Schweißarbeiten durchgeführt werden.

Eine konstruktiv optimierte Maschine zu schaffen, mittels derer an Werkstücken, insbesondere Blechen, sowohl Biege- als auch Fügeoperationen durchgeführt werden können, ist ausgehend von dem gattungsbildenden Stand der Technik Aufgabe der vorliegenden Erfindung.

Erfindungsgemäß gelöst wird diese Aufgabe durch Maschinen, wie sie in den unabhängigen Ansprüchen 1 und 2 beschrieben sind. Gemäß Anspruch 1 übernimmt der genannte Verfahrantrieb, gemäß Anspruch 2 der genannte Oberwerkzeugträger eine Funktion sowohl beim Biegen von Werkstücken als auch bei der Durchführung von Fügeoperationen. Die zur Steuerung des Verfahrantriebes und/oder zur Steuerung des Oberwerkzeugträgers der Biegestation vorgesehene Steuerungseinrichtung kann auch beim Fügen genutzt werden. Im Falle erfindungsgemäßer Maschinen erübrigen sich daher andernfalls erforderliche konstruktiv und steuerungstechnisch aufwändige Maßnahmen zur exakten Positionierung bzw. Bewegung der zur Durchführung von Fügeoperationen benötigten Fügevorrichtung bzw. des heb- und senkbaren Werkstückhalters. Die Fügevorrichtung nach Anspruch 1 kann entweder an einer separaten Fügestation oder aber an der betreffenden Biegestation betrieben werden. In dem letztgenannten Fall lässt sich das Biegewerkzeug der Biegestation bei entsprechender Gestaltung beispielsweise auch zum Fixieren des Werkstückes bei der Fügeoperation verwenden.

Bevorzugte Ausführungsarten der Erfindung ergeben sich aus den abhängigen Ansprüchen 3 bis 17.

Gemäß Anspruch 3 wird der Oberwerkzeugträger der Biegestation zur Anbringung des heb- und senkbaren Werkstückhalters der Fügestation genutzt.

Das kennzeichnende Merkmal von Anspruch 4 erlaubt einen einfachen Austausch des an dem Oberwerkzeugträger der erfindungsgemäßen Maschine angebrachten Werkstückhalters etwa aufgrund von Verschleiß und Beschädigungen ebenso wie zur Anpassung der Gesamtanordnung an unterschiedliche Bearbeitungsbedingungen.

Anspruch 5 beschreibt einen Werkstückhalter, der sich durch einfache konstruktive Gestaltung auszeichnet und dementsprechend beispielsweise auch von dem Betreiber der betreffenden Maschine selbst gefertigt werden kann.

Im Falle der Erfindungsbauart nach Anspruch 6 übernimmt der genannte Maschinentisch sowohl an der Biege- als auch an der Fügestation lagernde Funktion.

Mittels der Positioniereinrichtung gemäß Anspruch 7 lassen sich die zu bearbeitenden Werkstücke an der Fügestation in der für die Bearbeitung erforderlichen Art und Weise ausrichten.

Im Sinne der Erfindung kann die Überführung zu bearbeitender Werkstücke von der Biege- zu der Fügestation und/oder umgekehrt durchaus manuell erfolgen. Erfindungsgemäß bevorzugt wird zu diesem Zweck jedoch der Einsatz wenigstens eines Roboters (Anspruch 8). Aus Gründen der Zweckmäßigkeit sind Fügeoperationen in der Mehrzahl der Fälle der biegenden Werkstückbearbeitung im Ablauf nachgeschaltet.

Die vorstehend zu den unabhängigen Ansprüchen 1 und 2 dargelegten konstruktiven und steuerungstechnischen Vorteile sind im Falle der in Anspruch 9 beschriebenen Erfindungsbauart vereint.

Ausweislich der Ansprüche 10 und 11 ist in Weiterbildung der Erfindung eine bewegungsmäßige Kopplung der Fügevorrichtungen einerseits und der Positionieranschläge und/oder der Anschlagträger andererseits realisiert. Dabei kann eine Fügevorrichtung auch unmittelbar an einem Positionieranschlag oder an einem Anschlagträger angebracht sein. Etwa ein mit einer Fügevorrichtung versehener Positionieranschlag kann bei entsprechender konstruktiver Gestaltung ungeachtet der Fügevorrichtung die ihm an sich zugedachte Funktion einer Justierung von zu biegenden Werkstücken erfüllen. Zweckmäßig kann es dabei sein, die Fügevorrichtung an dem Positionieranschlag relativ zu diesem beweglich zu lagern. Dann besteht die Möglichkeit, die Fügevorrichtung, so lange sie nicht benötigt wird, an dem Positionieranschlag in eine Parkposition abseits der Werkstückanlage an dem Positionieranschlag zu verfahren, wo sie die Werkstückjustierung durch den Positionieranschlag nicht behindert. Entsprechende Vorkehrungen können im Falle der Anordnung einer Fügevorrichtung unmittelbar an einem Anschlagträger getroffen sein.

Das kennzeichnende Merkmal von Anspruch 12 erlaubt ein bedarfsabhängiges Herstellen oder Lösen der Verbindung zwischen dem Positionieranschlag bzw. dem Anschlagträger der Biegestation und der Fügevorrichtung. Wird die Fügevorrichtung bei einem oder mehreren Bearbeitungsgängen nicht benötigt, so kann sie beispielsweise vor Aufnahme der Bearbeitung von dem Positionieranschlag und/oder von dem Anschlagträger abgekuppelt werden. Insbesondere in Fällen, in denen sie über längere Zeit nicht zum Einsatz kommt, lässt sich die Fügevorrichtung vor dem Abkuppeln von dem Positionieranschlag bzw. von dem Anschlagträger in eine Parkposition verfahren. Aus dieser Parkposition kann die Fügevorrichtung dann bei Bedarf mittels des Positionieranschlages und/oder mittels des Anschlagträgers wieder abgeholt werden.

Eine Alternative zu der beschriebenen bedarfsorientierten Kupplung von Fügevorrichtung und Positionieranschlag bzw. Anschlagträger beschreibt Anspruch 13.

In Anspruch 14 angegeben ist eine Maßnahme zur Abstimmung erfindungsgemäßer Maschinen auf unterschiedliche Bearbeitungssituationen.

In einer Vielzahl von Anwendungsfällen sind als Fügeoperationen an Werkstücken Schweißarbeiten durchzuführen. Vor diesem Hintergrund sind an erfindungsgemäßen Maschinen die kennzeichnenden Merkmale der Ansprüche 15 bis 17 vorgesehen. Ergänzend oder alternativ kann aber auch von andersartigen Fügevorrichtungen Gebrauch gemacht werden. Beispielhaft zu nennen sind in diesem Zusammenhang Niet- und Schraubvorrichtungen.

Nachstehend wird die Erfindung anhand schematischer Darstellungen zu einem Ausführungsbeispiel näher erläutert. Es zeigen:
- Fig. 1: eine stark schematisierte Seitenansicht einer Maschine für die Blechbearbeitung mit einer Biegestation sowie mit einer Fügestation,
- Fig. 2: die Biegestation der Maschine nach Fig. 1,
- Fign. 3 und 4: die Fügestation der Maschine nach Fig. 1 und
- Fig. 5: die Maschine nach Fig. 1 mit einer Abschirmung vor der Fügestation.

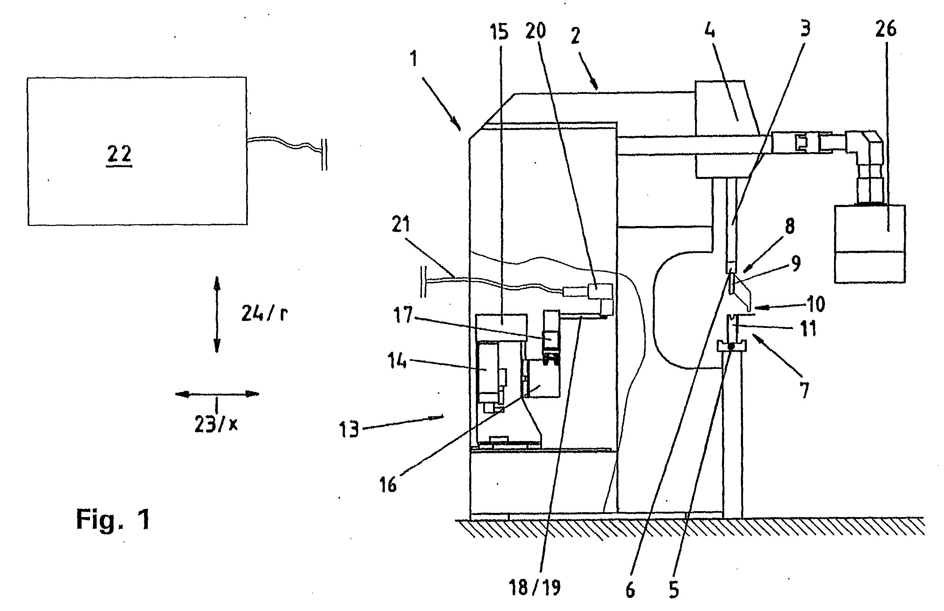

Gemäß Fig. 1 besitzt eine Maschine 1 für die Blechbearbeitung einen eigensteifen Maschinenrahmen 2, an dem ein Pressbalken 3 heb- und senkbar geführt ist. Zum Antrieb des Pressbalkens 3 dient ein herkömmlicher, ebenfalls an dem Maschinenrahmen 2 gelagerter hydraulischer Pressbalkenantrieb 4.

Dem Pressbalken 3 gegenüberliegend ist der Maschinenrahmen 2 als Maschinentisch 5 ausgebildet. An seinem dem Maschinentisch 5 zugewandten Ende ist der Pressbalken 3 mit einer Aufnahme 6 in Form einer senkrecht zu der Zeichenebene von Fig. 1 verlaufenden hinterschnittenen Längsnut versehen.

Ebenfalls senkrecht zu der Zeichenebene von Fig. 1 sind an der Maschine 1 eine Biegestation 7 sowie eine Fügestation 8 einander benachbart. Dabei liegt die Biegestation 7 auf der dem Betrachter von Fig. 1 zugewandten Seite.

Im Bereich der Biegestation 7 ist in die Aufnahme 6 an dem Pressbalken 3 ein als Biegeoberwerkzeug dienender Biegestempel 9 eingesetzt. Dementsprechend dient der Pressbalken 3 als Oberwerkzeugträger. Im Bereich der Fügestation 8 ist in der Aufnahme 6 des Pressbalkens 3 ein Werkstückhalter 35 einer Werkstückhaltevorrichtung 10 fixiert. Über die gesamte Länge des Pressbalkens 3 verläuft senkrecht zu der Zeichenebene von Fig. 1 eine Matrize 11 mit einer V-förmigen Längsnut. Die Matrize 11 wird an der Biegestation 7 als Biegeunterwerkzeug genutzt und bildet gemeinsam mit dem Biegestempel 9 das Biegewerkzeug der Biegestation 7. Im Bereich der Fügestation 8 ist an der Matrize 11 eine Werkstückauflage 12 angebracht, die gemeinsam mit dem Werkstückhalter 35 die Werkstückhaltevorrichtung 10 bildet.

Auf der von der Bedienerseite der Maschine 1 abgewandten Seite von Pressbalken 3 und Maschinentisch 5 ist eine Positioniereinrichtung in Form eines Hinteranschlagsystems 13 vorgesehen. Dieses umfasst als Verfahrantrieb eine motorische Antriebseinheit 14, die an einem Anschlagwagen 15 angebracht ist. Der Anschlagwagen 15 wiederum führt einen Anschlagschlitten 16, der seinerseits einen als Tragschiene 17 ausgebildeten Anschlagträger lagert. An der Tragschiene 17 sind im Bereich der Biegestation 7 zwei Positionieranschläge 18 angebracht. Im Bereich der Fügestation 8 lagert die Tragschiene 17 zwei Haltearme 19 für Fügevorrichtungen in Form zweier Laserschweißköpfe 20. Diese stehen über flexible Lichtleiterkabel 21 mit einem Lasergenerator 22 in Verbindung. Die Positionieranschläge 18 und die Haltearme 19 sind in dem gezeigten Beispielsfall baugleich. Alternativ zu den dargestellten Verhältnissen können die Positionieranschläge 18 einerseits und die Haltearme 19 andererseits an separaten Anschlagwagen angebracht sein, die von der Antriebseinheit 14 gemeinschaftlich angetrieben werden.

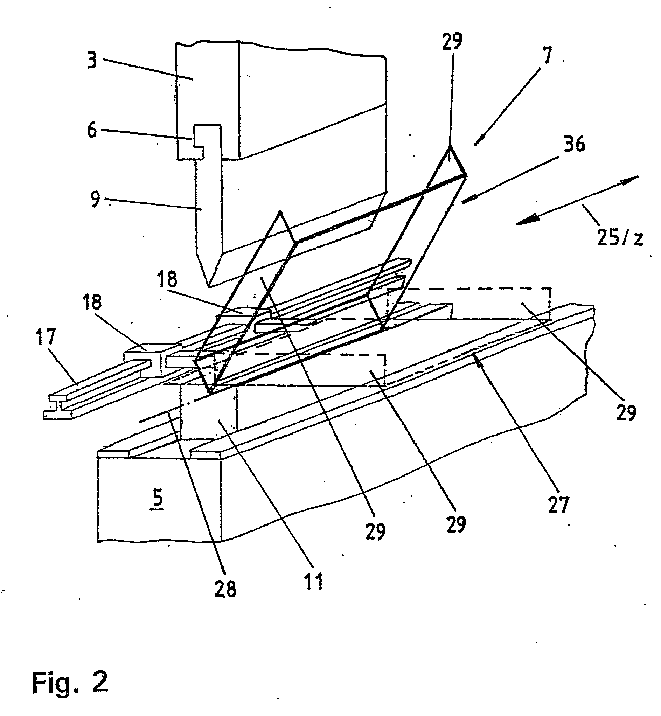

Mittels der Antriebseinheit 14 ist der Anschlagwagen 15 in einer in Fig. 1 durch einen Doppelpfeil 23 veranschaulichten x-Richtung relativ zu dem Maschinenrahmen 2 verfahrbar. Ebenfalls von der Antriebseinheit 14 angetrieben, lässt sich der Anschlagschlitten 16 an dem Anschlagwagen 15 in vertikaler r-Richtung (Doppelpfeil 24 in Fig. 1) verfahren. Dementsprechend sind mittels der Antriebseinheit 14 die an dem Anschlagschlitten 16 befestigte Tragschiene 17 sowie die Positionieranschläge 18 und die Haltearme 19 der Laserschweißköpfe 20 in der durch die x-Richtung sowie die r-Richtung definierten Ebene bewegbar. Eine Beweglichkeit der Tragschiene 17 in zu der Zeichenebene von Fig. 1 senkrechter Richtung (z-Richtung/Doppelpfeil 25 in Fig. 2) besteht im gezeigten Beispielsfall nicht, wäre aber durch in dieser Richtung verschiebbare Lagerung der Tragschiene 17 an dem Anschlagschlitten 16 realisierbar. In z-Richtung sind die Positionieranschläge 18 der Biegestation 7 sowie die Haltearme 19 für die Laserschweißköpfe 20 der Fügestation 8 an der Tragschiene 17 manuell umsetzbar. Dabei können die Positionieranschläge 18 sowie die Haltearme 19 mittels nicht im Einzelnen gezeigter Verriegelungsvorrichtungen mit der in z-Richtung jeweils eingenommenen Lage an der Tragschiene 17 arretiert werden.

Sämtliche Funktionen an der Maschine 1, insbesondere der Pressbalkenantrieb 4, die hydraulische Antriebseinheit 14 sowie die Laserschweißköpfe 20 bzw. der Lasergenerator 22 werden von einer programmierbaren Rechnersteuerung 26 gesteuert.

Mittels der Maschine 1 an einem Blech 27 durchgeführte Bearbeitungen seien anhand der Fign. 2 bis 4 beschrieben.

In dem Zustand, in dem es der Biegestation 7 an der Maschine 1 zugeführt wurde, ist das Blech 27 in Fig. 2 gestrichelt dargestellt. Demnach ist das Blech 27 bereits zuvor unter Erstellen von Laschen 29 abgekantet worden. An ihrem einen Längsende sind die Laschen 29 von dem ebenen Rand des Bleches 27 beabstandet. Dieser ebene Rand des Bleches 27 wird an der Biegestation 7 mit einem vorgegebenen Verlauf einer Biegelinie 28 sowie mit einem definierten Biegewinkel gebogen bzw. abgekantet. Zu diesem Zweck werden zunächst die Positionieranschläge 18 mittels der Antriebseinheit 14 in eine dem gewünschten Verlauf der Biegelinie 28 entsprechende Stellung verfahren. Dieses Verfahren der Positionieranschläge 18 geschieht durch entsprechendes, von der Rechnersteuerung 26 gesteuertes Verfahren der die Positionieranschläge 18 lagernden Tragschiene 17. Von dem Bediener wird dann das Blech 27 an der Biegestation 7 auf die Matrize 11 aufgelegt und gegen die Positionieranschläge 18 geschoben. Anschließend wird der Biegestempel 9 durch entsprechendes Verfahren des Pressbalkens 3 in die V-förmige Nut der Matrize 11 abgesenkt. Die Eindringtiefe des Biegestempels 9 an der Matrize 11 wird dabei bestimmt durch die gewünschte Größe des Biegewinkels an dem gebogenen Blech 27 und ist in der Rechnersteuerung 26 hinterlegt. Nach dem Rückhub des Biegestempels 9 kann das in Fig. 2 mit ausgezogenen Linien dargestellte gebogene Blech 27 von dem Bediener aus der Biegestation 7 der Maschine 1 entnommen werden. Der zuvor ebene Rand des Bleches 27 ist nun in eine Stellung gebogen, in welcher er stirnseitig an den Laschen 29 anliegt. Insgesamt ist das Blech 27 nun zu einer Blechhaube 36 geformt. Diese ist in Fig. 2 mit ausgezogenen Linien und dabei der Anschaulichkeit halber transparent dargestellt.

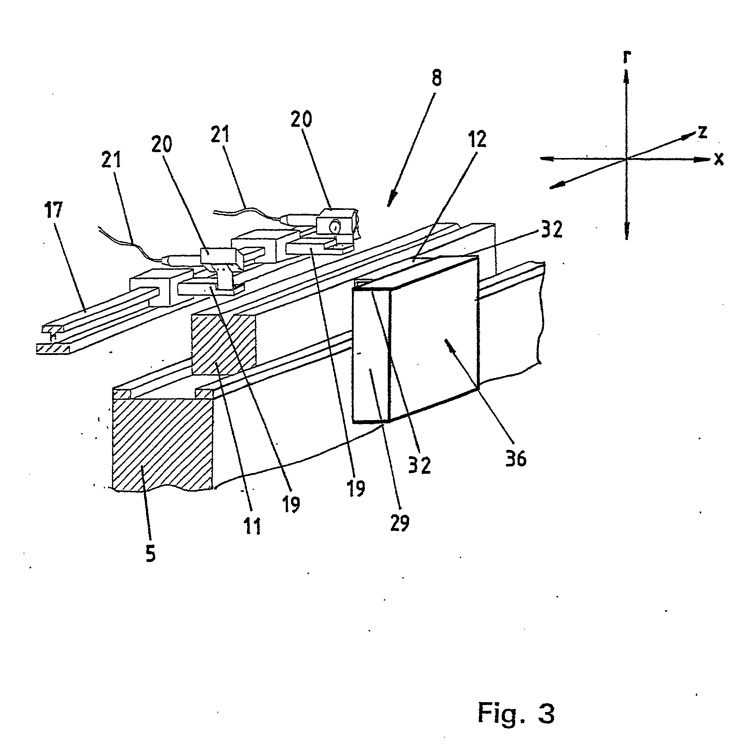

Die Blechhaube 36 wird nun von dem Bediener zu der Fügestation 8 der Maschine 1 verbracht. Alternativ kann zu diesem Zweck ein nicht gezeigter, bedienerseitig angeordneter Roboter verwendet werden. An der Fügestation 8 sind die Laserschweißköpfe 20 über die Haltearme 19 an der Tragschiene 17 angebracht. Die Laserschweißköpfe 20 nehmen dabei die in Fig. 3 gezeigte Position ein, die sowohl in x- als auch in r- und z-Richtung definiert ist. Im Interesse einer besseren Übersichtlichkeit ist in Fig. 3 der Pressbalken 3 mit dem daran angebrachten Werkstückhalter 35 nicht dargestellt.

Die Blechhaube 36 wird mit der Ausrichtung gemäß Fig. 3 in die Fügestation 8 der Maschine 1 eingelegt. Sie liegt dabei mit dem zuvor an der Biegestation 7 hochgebogenen Rand des Bleches 27 auf der an der Matrize 11 angebrachten Werkstückauflage 12 auf. Die Laschen 29 erstrecken sich seitlich in vertikaler Richtung. Der dem Bediener zugewandte vordere Rand der Werkstückauflage 12 bildet einen Positionieranschlag und die Werkstückauflage 12 damit eine Positioniereinrichtung für die Blechhaube 36.

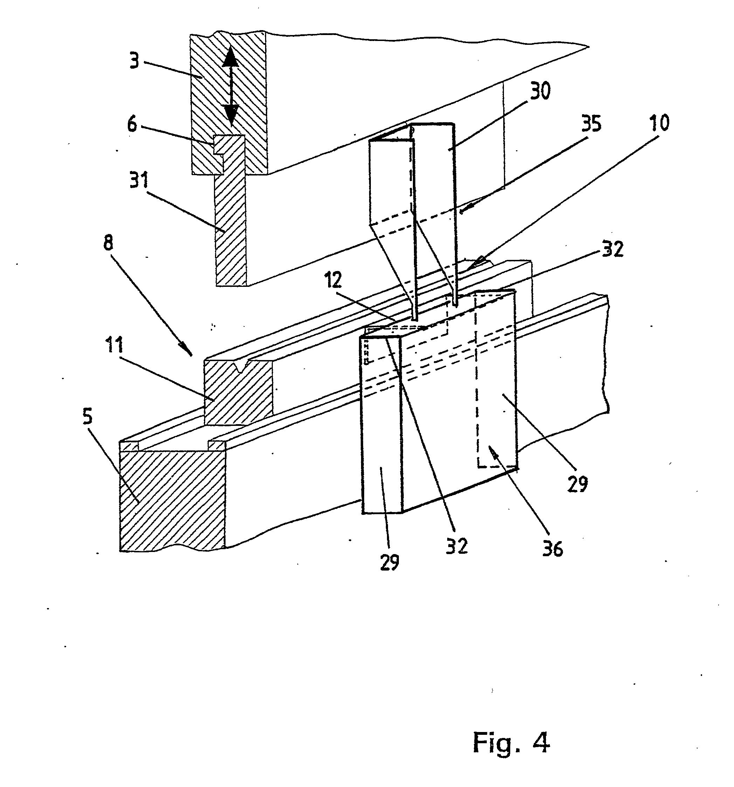

Nachdem die Blechhaube 36 auf der Werkstückauflage 12 mit seiner Solllage angeordnet ist, wird der angehobene Pressbalken 3 mit dem daran angebrachten Werkstückhalter 35 von der Rechnersteuerung 26 gesteuert abgesenkt. Der Werkstückhalter 35 umfasst ein aus Blech gefertigtes Winkelprofil 30 sowie eine Basisplatte 31, mit welcher das Winkelprofil 30 verschraubt ist. An der Basisplatte 31 ist der Werkstückhalter 35 mit einem entsprechend konturierten Plattenrand austauschbar in die Aufnahme 6 an dem Pressbalken 3 eingeschoben. Der in die untere Endstellung verfahrene Werkstückhalter 35 beaufschlagt mit den Schenkelenden des Winkelprofils 30 die Blechhaube 36 und sorgt dadurch für eine klemmende Fixierung der Blechhaube 36 zwischen sich und der Werkstückauflage 12. Die Schenkel des Winkelprofils 30 des Werkstückhalters 35 sind dabei zwischen Stößen 32 der Laschen 29 und dem zuvor hochgebogenen Rand des Bleches 27 angeordnet. Insgesamt ergeben sich die Verhältnisse gemäß Fig. 4. In dieser Abbildung ist der Übersichtlichkeit halber von der Darstellung der an der Fügestation 8 angeordneten Laserschweißköpfe 20 abgesehen worden.

Nach der Fixierung der Blechhaube 36 mittels der Werkstückhaltevorrichtung 10 werden die Laserschweißköpfe 20 durch entsprechendes, von der Rechnersteuerung 26 gesteuertes und mittels der Antriebseinheit 14 bewirktes Verfahren der Tragschiene 17 in x-Richtung an den Stößen 32 außen entlang bewegt. Sobald die Laserschweißköpfe 20 ausgehend von ihrer in Fig. 3 gezeigten anfänglichen Position in x-Richtung das ihnen zugekehrte Ende der Stöße 32 erreicht haben, werden sie mittels der Rechnersteuerung 26 eingeschaltet. Die Laserschweißköpfe 20 bleiben in Betrieb, bis das bedienerseitige Ende der Stöße 32 erreicht ist. Dann werden die Laserschweißköpfe 20 rechnergesteuert außer Funktion gesetzt. Auf ihrem Weg an der Blechhaube 36 entlang erstellen die Laserschweißköpfe 20 zwischen den Laschen 29 und dem zuvor hochgebogenen Rand des Bleches 27 Schweißnähte. Die Seitenwände der Blechhaube 36 sind an diesen Schweißnähten miteinander verbunden.

In dem beschriebenen Beispielsfall waren die Laserschweißköpfe 20 mit Justieren der Positionieranschläge 18 an der Biegestation 7 bereits in z- sowie in r-Richtung in ihrer Solllage ausgerichtet und dementsprechend zur Herstellung der vorstehend beschriebenen Schweißnähte lediglich noch in x-Richtung zu verfahren. In anders gelagerten Bearbeitungsfällen besteht gleichwohl die Möglichkeit, die Laserschweißköpfe 20 nach Beendigung der Arbeiten an der Biegestation 7 und vor ihrer Inbetriebnahme auch in r- und/oder in z-Richtung zu justieren. Dabei werden die Laserschweißköpfe 20 in r-Richtung mittels der Antriebseinheit 14 entsprechend verfahren. In z-Richtung werden die Laserschweißköpfe 20 an der gezeigten Maschine 1 manuell justiert. Alternativ denkbar ist es, dass die Tragschiene 17 und/oder die Haltearme 19 bzw. die Laserschweißköpfe 20 selbst in z-Richtung motorisch angetrieben werden und von der Rechnersteuerung 26 gesteuert in ihre Sollage verfahren werden.

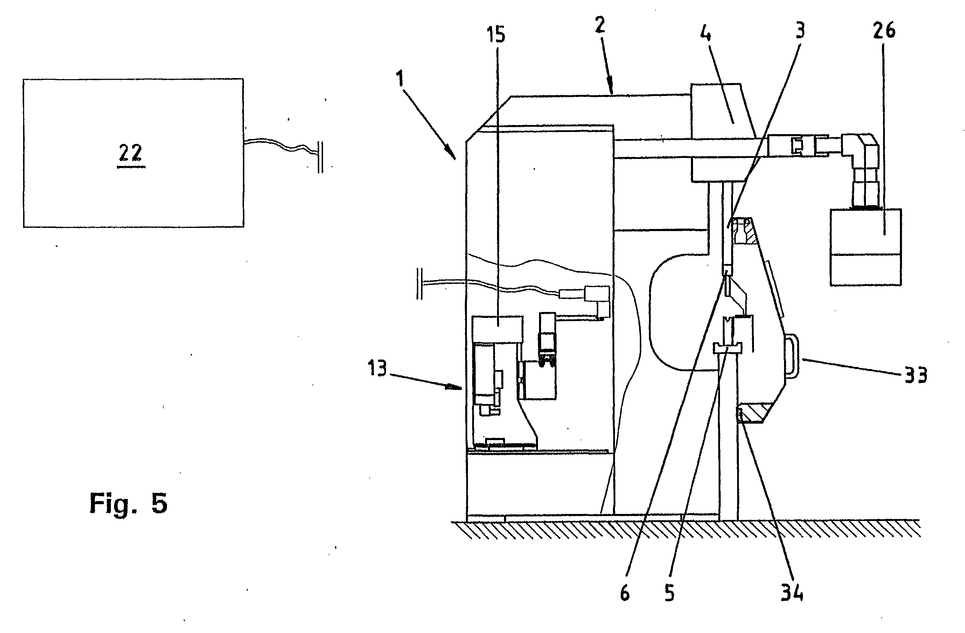

Nach Fertigstellen der Schweißnähte an den Stößen 32 werden die Laserschweißköpfe 20 durch entsprechendes Verfahren der Tragschiene 17 in x-Richtung wieder in ihre Ausgangsposition gemäß Fig. 3 verbracht. Der Pressbalken 3 mit dem Werkstückhalter 35 wird anschließend angehoben und die nun abschließend bearbeitete Blechhaube 36 kann von dem Bediener aus der Fügestation 8 der Maschine 1 entnommen werden. Für die Dauer der Inbetriebnahme der Laserschweißköpfe 20 wird ein in Fig. 5 gezeigter Schweißschirm 33 bedienerseitig vor die Fügestation 8 geschoben. Ausweislich Fig. 5 ist der Schweißschirm 33 mittels einer Führungsschiene 34 an dem Maschinenrahmen 2 verschiebbar geführt.

## Patentansprüche

1. Maschine für die Bearbeitung von Werkstücken, insbesondere von Blechen (27), umfassend wenigstens eine Biegestation (7) mit zumindest einem Biegewerkzeug (9, 11) zum Biegen eines Werkstücks sowie mit zumindest einer Positioniereinrichtung (13) zum Positionieren des Werkstücks gegenüber dem Biegewerkzeug (9, 11), wobei die Positioniereinrichtung (13) der Biegestation (7) wenigstens einen Positionieranschlag (18) für das Werkstück aufweist, der mittels eines Verfahrantriebes (14) gesteuert verfahrbar ist, **dadurch gekennzeichnet, dass** die Maschine wenigstens eine Fügevorrichtung (20) zur Durchführung wenigstens einer Fügeoperation an dem Werkstück aufweist und dass die Fügevorrichtung (20) mittels des Verfahrantriebes (14) des Positionieranschlags (18) der Biegestation (7) gesteuert in eine Arbeitsposition und/oder bei der Durchführung zumindest einer Fügeoperation relativ zu dem Werkstück verfahrbar ist.

2. Maschine für die Bearbeitung von Werkstücken, insbesondere von Blechen (27), umfassend wenigstens eine Biegestation (7) mit zumindest einem Biegewerkzeug (9, 11) zum Biegen eines Werkstücks, wobei das Biegewerkzeug (9, 11) ein Biegeober- (9) sowie ein Biegeunterwerkzeug (11) aufweist und wobei das Biegeoberwerkzeug (9) mittels eines gesteuert heb- und senkbaren Oberwerkzeugträgers (3) unter Biegen des Werkstückes relativ zu dem Biegeunterwerkzeug (11) bewegbar ist, **dadurch gekennzeichnet, dass** die Maschine neben wenigstens einer Biegestation (7) zumindest eine Fügestation (8) aufweist, an welcher wenigstens eine Fügevorrichtung (20) zur Durchführung zumindest einer Fügeoperation an dem Werkstück sowie eine Werkstückhaltevorrichtung (10) zur Fixierung des Werkstücks bei der Durchführung der Fügeoperation vorgesehen sind, wobei die Werkstückhaltevorrichtung (10) an der Fügestation (8) wenigstens einen mittels des Oberwerkzeugträgers (3) der Biegestation (7) heb- und senkbaren Werkstückhalter (35) aufweist, mittels dessen das Werkstück bei der Durchführung der Fügeoperation an einem Widerlager abstützbar und dadurch fixierbar ist.

3. Maschine nach Anspruch 2, **dadurch gekennzeichnet, dass** sich der Oberwerkzeugträger (3) der Biegestation (7) über die Biegestation (7) hinaus bis zu der Fügestation (8) erstreckt und dass der heb- und senkbare Werkstückhalter (35) der Fügestation (8) an dem Oberwerkzeugträger (3) angebracht ist.

4. Maschine nach Anspruch 2 oder 3, **dadurch gekennzeichnet, dass** der heb- und senkbare Werkstückhalter (35) der Fügestation (8) an dem Oberwerkzeugträger (3) austauschbar gehalten ist.

5. Maschine nach einem der Ansprüche 2 bis 4, **dadurch gekennzeichnet, dass** der Werkstückhalter (35) wenigstens teilweise als aus Blech gefertigtes Winkelprofil (30) ausgebildet ist.

6. Maschine nach einem der Ansprüche 2 bis 5, **dadurch gekennzeichnet, dass** das Biegeunterwerkzeug (11) der Biegestation (7) auf einem Maschinentisch (5) gelagert ist und dass sich der Maschinentisch (5) über die Biegestation (7) hinaus bis zu der Fügestation (8) erstreckt und dort das Widerlager zur Abstützung des Werkstückes mittels des heb- und senkbaren Werkstückhalters (35) bildet.

7. Maschine nach einem der Ansprüche 2 bis 6, **dadurch gekennzeichnet, dass** an der Fügestation (8) wenigstens eine Positioniereinrichtung (12) für das Werkstück vorgesehen ist.

8. Maschine nach einem der Ansprüche 2 bis 7, **dadurch gekennzeichnet, dass** zur Überführung des Werkstückes von der Biegestation (7) zu der Fügestation (8) und/oder umgekehrt wenigstens ein Roboter vorgesehen ist.

9. Maschine nach einem der Ansprüche 2 bis 8, **dadurch gekennzeichnet, dass** die Biegestation (7) zumindest eine Positioniereinrichtung (13) zum Positionieren des Werkstückes gegenüber dem Biegewerkzeug (9, 11) umfasst, welche wenigstens einen mittels eines Verfahrantriebes (14) gesteuert verfahrbaren Positionieranschlag (18) für das Werkstück aufweist und dass die Fügevorrichtung (20) der Fügestation (8) mittels des Verfahrantriebs (14) des Positionieranschlags (18) der Biegestation (7) gesteuert in eine Arbeitsposition und/oder bei der Durchführung zumindest einer Fügeoperation relativ zu dem Werkstück verfahrbar ist.

10. Maschine nach wenigstens einem der Ansprüche 1 oder 2 bis 9, **dadurch gekennzeichnet, dass** die Fügevorrichtung (20) mit dem Positionieranschlag (18) gekoppelt verfahrbar ist.

11. Maschine nach wenigstens einem der Ansprüche 1 oder 2 bis 10, **dadurch gekennzeichnet, dass** der Positionieranschlag (18) an wenigstens einem mittels des Verfahrantriebes (14) gesteuert verfahrbaren Anschlagträger (17) angeordnet und dass die Fügevorrichtung (20) mit dem Anschlagträger (17) gekoppelt verfahrbar ist.

12. Maschine nach wenigstens einem der Ansprüche 1 oder 2 bis 11, **dadurch gekennzeichnet, dass** die Fügevorrichtung (20) gesteuert an den Positionieranschlag (18) und/oder an den Anschlagträger (17) ankuppelbar und/oder von dem Positionieranschlag (18) und/oder von dem Anschlagträger (17) abkuppelbar ist.

13. Maschine nach wenigstens einem der vorhergehenden Ansprüche 1 oder 2 bis 12, **dadurch gekennzeichnet, dass** die Fügevorrichtung (20) mit dem Positionieranschlag (18) und/oder mit dem Anschlagträger (17) permanent verbunden ist.

14. Maschine nach wenigstens einem der Ansprüche 1 oder 2 bis 13, **dadurch gekennzeichnet, dass** die Fügevorrichtung (20) an dem Positionieranschlag (18) und/oder an dem Anschlagträger (17) umsetzbar angebracht ist.

15. Maschine nach wenigstens einem der Ansprüche 1 oder 2 bis 14, **dadurch gekennzeichnet, dass** als Fügevorrichtung (20) eine Schweißvorrichtung vorgesehen ist.

16. Maschine nach wenigstens einem der Ansprüche 1 oder 2 bis 15, **dadurch gekennzeichnet, dass** als Schweißvorrichtung eine Laserschweißvorrichtung vorgesehen ist.

17. Maschine nach wenigstens einem der vorhergehenden Ansprüche 1 oder 2 bis 16, **dadurch gekennzeichnet, dass** die Laserschweißvorrichtung über wenigstens ein flexibles Lichtleiterkabel (21) mit einem Lasergenerator (22) in Verbindung steht.

## Claims

1. Machine for processing workpieces, in particular metal sheets (27), comprising at least one bending station (7) having at least one bending tool (9, 11) for bending a workpiece together with at least one positioning device (13) for positioning the workpiece in relation to the bending tool (9, 11), the positioning device (13) of the bending station (7) having at least one workpiece positioning stop (18), adjustment of which can be controlled by means of an adjustment drive (14), **characterised in that** the machine has at least one joining device (20) for performing at least one joining operation on the workpiece and that by means of the of the adjustment drive (14) of the positioning stop (18) of the bending station (7) the joining device (20) can be controllably adjusted into a working position and/or adjusted relative to the workpiece when performing at least one joining operation.

2. Machine for processing workpieces, in particular metal sheets (27), comprising at least one bending station (7) having at least one bending tool (9, 11) for bending a workpiece, the bending tool (9, 11) having an upper bending tool (9) and a lower bending tool (11) and the upper bending tool (9) being moveable relative to the lower bending tool (11) by means of a controlled upper tool carrier (3) that can be raised and lowered. when bending the workpiece, **characterised in that** in addition to at least one bending station (7) the machine has at least one joining station (8), at which at least one joining device (20) for performing at least one joining operation on the workpiece and a workpiece holding device (10) for fixing the workpiece when performing the joining operation are provided, the workpiece holding device (10) at the joining station (8) having at least one workpiece holder (35), which can be raised and lowered by means of the upper tool carrier (3) of the bending station (7) and by means of which the workpiece can be supported on an abutment and thereby fixed when performing the joining operation.

3. Machine according to Claim 2, **characterised in that** the upper tool carrier (3) of the bending station (7) extends beyond the bending station (7) to the joining station (8) and that the raisable and lowerable workpiece holder (35) of the joining station (8) is fitted to the upper tool carrier (3).

4. Machine according to Claim 2 or 3, **characterised in that** the raisable and lowerable workpiece holder (35) of the joining station (8) is interchangeably held on the upper tool carrier (3).

5. Machine according to one of Claims 2 to 4, **characterised in that** the workpiece holder (35) is at least partially designed as an angled section (30) made from sheet metal.

6. Machine according to one of Claims 2 to 5, **characterised in that** the lower bending tool (11) of the bending station (7) is supported on a machine table (5) and that the machine table (5) extends beyond the bending station (7) to the joining station (8) where it forms the abutment for supporting the workpiece by means of the raisable and lowerable workpiece holder (35).

7. Machine according to one of Claims 2 to 6, **characterised in that** at least one workpiece positioning device (12) is provided at the joining station (8).

8. Machine according to one of Claims 2 to 7, **characterised in that** at least one robot is provided for transferring the workpiece from the bending station (7) to the joining station (8) and/or vice-versa.

9. Machine according to one of Claims 2 to 8, **characterised in that** for positioning the workpiece in relation to the bending tool (9, 11) the bending station (7) comprises at least one positioning device (13), which has at least one workpiece positioning stop (18), adjustment of which can be controlled by means of an adjustment drive (14), and that the joining device (20) of the joining station (8) can be controllably adjusted into a working position and/or adjusted relative to the workpiece by means of the of the adjustment drive (14) of the positioning stop (18) of the bending station (7) when performing at least one joining operation.

10. Machine according to at least one of Claims 1 or 2 to 9, **characterised in that** the joining device (20) is adjustable when coupled to the positioning stop (18).

11. Machine according to at least one of Claims 1 or 2 to 10, **characterised in that** the positioning stop (18) is arranged on at least one stop carrier (17) that can be controllably adjusted by means of the adjustment drive (14) and that the joining device (20) is adjustable when coupled to the stop carrier (17).

12. Machine according to at least one of Claims 1 or 2 to 11, **characterised in that** the joining device (20) can be controllably coupled to the positioning stop (18) and/or to the stop carrier (17) and/or uncoupled from the positioning stop (18) and/or from the stop carrier (17).

13. Machine according to at least one of Claims 1 or 2 to 12, **characterised in that** the joining device (20) is permanently connected to the positioning stop (18) and/or to the stop carrier (17).

14. Machine according to at least one of Claims 1 or 2 to 13, **characterised in that** the joining device (20) is removably fitted to the positioning stop (18) and/or to the stop carrier (17).

15. Machine according to at least one of Claims 1 or 2 to 14, **characterised in that** a welding device is provided as joining device (20).

16. Machine according to at least one of Claims 1 or 2 to 15, **characterised in that** a laser welding device is provided as welding device.

17. Machine according to at least one of Claims 1 or 2 to 16, **characterised in that** the laser welding device is connected to a laser generator (22) by way of at least one flexible fibre optic cable (21).

## Revendications

1. Machine pour l'usinage de pièces, notamment de tôles (27), comprenant au moins un poste de pliage (7) équipé d'au moins un outil de pliage (9, 11) pour plier une pièce et d'au moins un équipement de positionnement (13) pour positionner la pièce par rapport à l'outil de pliage (9, 11), l'équipement de positionnement (13) du poste de pliage (7) présentant au moins une butée de positionnement (18) pour la pièce, butée qui peut être déplacée de manière dirigée au moyen d'un entraînement en translation (14), **caractérisée en ce que** la machine présente au moins un dispositif d'assemblage (20) pour effectuer au moins une opération d'assemblage sur la pièce, et **en ce que** le dispositif d'assemblage (20) peut, au moyen de l'entraînement en translation (14) de la butée de positionnement (18) du poste de pliage (7), être déplacé de manière dirigée dans une position de travail et/ou lors de l'exécution d'au moins une opération d'assemblage par rapport à la pièce.

2. Machine pour l'usinage de pièces, notamment de tôles (27), comprenant au moins un poste de pliage (7) équipé d'au moins un outil de pliage (9, 11) pour plier une pièce, l'outil de pliage (9, 11) présentant un outil supérieur (9) de pliage et un outil inférieur (11) de pliage, et l'outil supérieur (9) de pliage pouvant être déplacé par rapport à l'outil inférieur (11) de pliage au moyen d'un support (3) d'outil supérieur pouvant être relevé et abaissé de manière dirigée, la pièce étant alors pliée, **caractérisée en ce que** la machine présente, en plus d'au moins un poste de pliage (7), au moins un poste d'assemblage (8), où sont prévus au moins un dispositif d'assemblage (20) pour effectuer au moins une opération d'assemblage sur la pièce et un dispositif (10) de maintien de pièce pour fixer en position la pièce lors de l'exécution de l'opération d'assemblage, le dispositif (10) de maintien de pièce du poste d'assemblage (8) présentant au moins un porte-pièce (35), qui peut être relevé et abaissé au moyen du support (3) d'outil supérieur du poste de pliage (7) et au moyen duquel la pièce peut, lors de l'exécution de l'opération d'assemblage, s'appuyer coutre un élément de contre-appui et être ainsi fixée en position.

3. Machine selon la revendication 2, **caractérisée en ce que** le support (3) d'outil supérieur du poste de pliage (7) s'étend au-delà du poste de pliage (7) jusqu'au poste d'assemblage (8), et **en ce que** le porte-pièce (35), pouvant être relevé et abaissé, du poste d'assemblage (8) est monté sur le support (3) d'outil supérieur.

4. Machine selon la revendication 2 ou 3, **caractérisée en ce que** le porte-pièce (35), pouvant être relevé et abaissé, du poste d'assemblage (8) est maintenu sur le support (3) d'outil supérieur de manière remplaçable.

5. Machine selon l'une quelconque des revendications 2 à 4, **caractérisée en ce que** le porte-pièce (35) est réalisé au moins partiellement sous forme de cornière (30) en tôle.

6. Machine selon l'une quelconque des revendications 2 à 5, **caractérisée en ce que** l'outil inférieur (11) de pliage du poste de pliage (7) est monté sur une table de machine (5), et **en ce que** la table de machine (5) s'étend au-delà du poste de pliage (7) jusqu'au poste d'assemblage (8) et y constitue l'élément de contre-appui pour le soutien de la pièce au moyen du porte-pièce (35) pouvant être relevé et abaissé.

7. Machine selon l'une quelconque des revendications 2 à 6, **caractérisée en ce qu'**au moins un équipement de positionnement (12) pour la pièce est prévu au poste d'assemblage (8).

8. Machine selon l'une quelconque des revendications 2 à 7, **caractérisée en ce qu'**au moins un robot est prévu pour transférer la pièce du poste de pliage (7) au poste d'assemblage (8) et/ou vice-versa.

9. Machine selon l'une quelconque des revendications 2 à 8, **caractérisée en ce que** le poste de pliage (7) comprend au moins un équipement de positionnement (13) pour positionner la pièce par rapport à l'outil de pliage (9, 11), équipement qui présente au moins une butée de positionnement (18) pour la pièce, butée qui peut être déplacée de manière dirigée au moyen d'un entraînement en translation (14); et **en ce que** le dispositif d'assemblage (20) du poste d'assemblage (8) peut, au moyen de l'entraînement en translation (14) de la butée de positionnement (18) du poste de pliage (7), être déplacé de manière dirigée par rapport à la pièce dans une position de travail et/ou lors de l'exécution d'au moins une opération d'assemblage.

10. Machine selon au moins l'une des revendications 1 ou 2 à 9, **caractérisée en ce que** le dispositif d'assemblage (20) peut être déplacé de manière couplée à la butée de positionnement (18).

11. Machine selon au moins l'une des revendications 1 ou 2 à 10, **caractérisée en ce que** la butée de positionnement (18) est disposée sur au moins un support de butée (17) qui peut être déplacé de manière dirigée au moyen de l'entraînement en translation (14), et **en ce que** le dispositif d'assemblage (20) peut être déplacé de manière couplée au support de butée (17).

12. Machine selon au moins l'une des revendications 1 ou 2 à 11, **caractérisée en ce que** le dispositif d'assemblage (20) peut, de manière dirigée, être accouplé à la butée de positionnement (18) et/ou au support de butée (17), et/ou être désaccouplé de la butée de positionnement (18) et/ou du support de butée (17).

13. Machine selon au moins l'une des revendications 1 ou 2 à 12, **caractérisée en ce que** le dispositif d'assemblage (20) est assemblé de manière permanente à la butée de positionnement (18) et/ou au support de butée (17).

14. Machine selon au moins l'une des revendications 1 ou 2 à 13, **caractérisée en ce que** le dispositif d'assemblage (20) est monté de manière déplaçable sur la butée de positionnement (18) et/ou sur le support de butée (17).

15. Machine selon au moins l'une des revendications 1 ou 2 à 14, **caractérisée en ce qu'**un dispositif de soudage est prévu comme dispositif d'assemblage (20).

16. Machine selon au moins l'une des revendications 1 ou 2 à 15, **caractérisée en ce qu'**un dispositif de soudage à laser est prévu comme dispositif de soudage.

17. Machine selon au moins l'une des revendications 1 ou 2 à 16_{,} **caractérisée en ce que** le dispositif de soudage à laser est relié à un générateur laser (22) par l'intermédiaire d'au moins un câble souple (21) à fibres optiques.
